# EUROPEAN PATENT SPECIFICATION

(11) **EP 3 845 886 B1**
(45) Date of publication and mention of the grant of the patent: **09.08.2023**
(21) Application number: 20216032.1
(22) Date of filing: 21.12.2020
(51) Int. Cl.: G01N 21/35, G01S 13/88

(54) **TERAHERTZ WAVE SECURITY INSPECTION SYSTEM AND METHOD**
TERAHERTZ SICHERHEITSÜBERPRÜFUNGSSYSTEM UND VERFAHREN
SYSTÈME AUX ONDES TÉRAHERTZ ET PROCÉDÉ D'INSPECTION DE SÉCURITÉ

(30) Priority: 30.12.2019 CN 201911402454
(43) Date of publication of application: 07.07.2021
(73) Proprietor: Tsinghua University, Haidian District, Beijing 100084 (CN); Nuctech Company Limited, TongFang Building Shuangqinglu Haidian District Beijing 100084 (CN)
(72) Inventor: ZHAO, Ziran, BEIJING, 100084 (CN); CHEN, Zhiqiang, BEIJING, 100084 (CN); LI, Yuanjing, BEIJING, 100084 (CN); QIAO, Lingbo, BEIJING, 100084 (CN); ZHENG, Zhimin, BEIJING, 100084 (CN); BAI, Xiaojing, BEIJING, 100084 (CN); JIN, Yingkang, BEIJING, 100084 (CN); YOU, Yan, BEIJING, 100084 (CN); LIU, Xing, BEIJING, 100084 (CN)
(74) Representative: Cabinet Beau de Loménie

(56) References cited:
- CN-A- 109 492 714
- CN-A- 110 031 909
- US-A1- 2018 364 158
- M. KOWALSKI ET AL: "Hidden Object Detection System Based on Fusion of THz and VIS Images", ACTA PHYSICA POLONICA: SERIES A, vol. 124, no. 3, 1 September 2013 (2013-09-01), pages 490-493, XP055662050, PL ISSN: 0587-4246, DOI: 10.12693/APhysPolA.124.490
- LIU TING ET AL: "Concealed Object Detection for Activate Millimeter Wave Image", IEEE TRANSACTIONS ON INDUSTRIAL ELECTRONICS, IEEE SERVICE CENTER, PISCATAWAY, NJ, USA, vol. 66, no. 12, 1 December 2019 (2019-12-01), pages 9909-9917, XP011737910, ISSN: 0278-0046, DOI: 10.1109/TIE.2019.2893843 [retrieved on 2019-08-01]
- GUO LIN ET AL: "High-Performance Detection of Concealed Forbidden Objects on Human Body with Deep Neural Networks Based on Passive Millimeter Wave and Visible Imagery", JOURNAL OF INFRARED, MILLIMETER AND TERAHERTZ WAVES, SPRINGER NEW YORK LLC, US, vol. 40, no. 3, 11 January 2019 (2019-01-11), pages 314-347, XP036727798, ISSN: 1866-6892, DOI: 10.1007/S10762-018-0558-3 [retrieved on 2019-01-11]
- YEOM SEOKWON ET AL: "Multi-level segmentation of passive millimeter wave images with Gaussian mixture modeling", TERAHERTZ PHYSICS, DEVICES, AND SYSTEMS V: ADVANCE APPLICATIONS IN INDUSTRY AND DEFENSE, SPIE, 1000 20TH ST. BELLINGHAM WA 98225-6705 USA, vol. 8023, no. 1, 13 May 2011 (2011-05-13) , pages 1-6, XP060016765, DOI: 10.1117/12.883778 [retrieved on 1901-01-01]
- ERIK BLASCH ET AL: "Image fusion of the Terahertz-visual NAECON Grand Challenge data", AEROSPACE AND ELECTRONICS CONFERENCE (NAECON), 2012 IEEE NATIONAL, IEEE, 25 July 2012 (2012-07-25), pages 220-227, XP032424381, DOI: 10.1109/NAECON.2012.6531058 ISBN: 978-1-4673-2791-6
- NILI VAHID AMIN ET AL: "Clutter rejection and object separation in active milimeter-wave imaging system", 2016 IEEE INTERNATIONAL SYMPOSIUM ON ANTENNAS AND PROPAGATION (APSURSI), IEEE, 26 June 2016 (2016-06-26), pages 177-178, XP032983988, DOI: 10.1109/APS.2016.7695797 [retrieved on 2016-10-25]
- YUANMENG ZHAO ET AL: "Terahertz / Visible Dual-band Image Fusion Based on Hybrid Principal Component Analysis", JOURNAL OF PHYSICS: CONFERENCE SERIES, INSTITUTE OF PHYSICS PUBLISHING, BRISTOL, GB, vol. 1187, no. 4, 8 May 2019 (2019-05-08), page 42096, XP020338139, ISSN: 1742-6596, DOI: 10.1088/1742-6596/1187/4/042096 [retrieved on 2019-05-08]

## Description

### TECHNICAL FIELD

The present disclosure relates to a field of security inspection technology, and in particular to a terahertz wave security inspection system and a terahertz wave security inspection method.

### BACKGROUND

A terahertz wave security inspection system performs scanning and imaging by receiving a terahertz wave signal emitted by an object to be detected (such as a human body). After the terahertz wave emitted by the object to be detected is reflected by a speculum, the terahertz wave is focused by a lens on a detector array at a focal position, and the detector array converts the terahertz wave signal into an electrical signal to generate a terahertz wave image. However, the terahertz wave image generated by current passive terahertz wave security inspection system is prone to background interference, false alarms, etc., resulting in low security inspection efficiency and low inspection accuracy.

CN109492714A discloses an image processing device, and a method thereof. The device includes an image acquisition module which is configured to acquire a terahertz/millimeter wave image and at least two images which are imaged under at least two light/radiation bands different from the terahertz/millimeter wave band and have the same scene as the terahertz/millimeter wave image; an image registration module configured to perform image registration on the terahertz/millimeter wave image and the at least two images by taking the terahertz/millimeter wave image as a reference; an image fusion module which is configured to perform multi-level fusion on the registered terahertz/millimeter wave image and each image in the at least two registered images successively by using at least one fusion method to obtain a multi-level fusion image; and an image identification module which is configured to identify the article carried on the object in the fused image by using an image identification method.

M. Kowalski ET AL: "Hidden Object Detection System Based on Fusion of THz and VIS Images" (ACTA PHYSICA POLONICA: SERIES A, vol. 124, no. 3, 1 September 2013, pages 490-493, XP055662050, PL, ISSN: 0587-4246, DOI: 10.12693/APhysPolA.124.490), discloses that terahertz imaging makes it possible to acquire images of objects concealed underneath clothing by measuring the radiometric temperatures of different objects on a human subject. Finding objects hidden under clothes is one of key issues of public places security. A possible solution of this problem is a multispectral, terahertz-based screening system with implemented image fusion algorithm. The result of the fusion is a new image which gives more information and is more suitable for human perception. An imaging system is usually composed of various subsystems. Many of the imaging systems use imaging devices working in various spectral ranges. The aim of our studies is to detect and visualize objects hidden under clothing. Detection of potentially dangerous objects is important, but without proper visualization, can be difficult to utilize. Our goal is to build a system harmless to humans for screening and detection of hidden objects using a THz and VIS cameras. The presented system draws attention not only on the properties offered by a single camera but also on the potential of synergetic effects of the system by using the fusion of data registered by different sensor units. In this paper we present the multispectral passive imaging system for hidden threats visualization based on THz and VIS cameras.

### SUMMARY

The invention is set out by the appended claims.

According to an embodiment of an aspect of the present disclosure, there is provided a terahertz wave security inspection system, comprising: an information acquisition device comprising a terahertz wave imaging mechanism configured to generate a terahertz wave image of an object to be detected and a visible light imaging mechanism configured to generate a visible light image of the object to be detected; and a data processing device in data communication with the information acquisition device and configured to: acquire the terahertz wave image of the object to be detected provided by the terahertz wave imaging mechanism and the visible light image of the object to be detected provided by the visible light imaging mechanism, determine whether a suspected item exists in the object to be detected or not based on the terahertz wave image and the visible light image, and if it is determined that a suspected item exists in the object to be detected, determine whether the suspected item is a prohibited item or not based on the visible light image and the terahertz wave image.

In some embodiments, the visible light image generated by the visible light imaging mechanism matches the terahertz wave image generated by the terahertz wave imaging mechanism within a range of depth of field of the terahertz wave imaging mechanism.

In some embodiments, the visible light image generated by the visible light imaging mechanism matching the terahertz wave image generated by the terahertz wave imaging mechanism within a range of depth of field of the terahertz wave imaging mechanism comprises: the visible light image generated by the visible light imaging mechanism, after being cropped, matches the terahertz wave image generated by the terahertz wave imaging mechanism within the range of depth of field of the terahertz wave imaging mechanism.

In some embodiments, the visible light imaging mechanism is located at an inner side of a virtual cone with a center of rotation of a speculum of the terahertz wave imaging mechanism as a vertex, a normal direction of field of view as a centerline, and a vertex angle of view of α/3, wherein α is a field of view of the terahertz wave imaging mechanism.

In some embodiments, the terahertz wave security inspection system comprises a housing in which the terahertz wave imaging mechanism is located, and the housing is provided with a window, a terahertz wave emitted by the object to be detected is transmitted through the window and received by the terahertz wave imaging mechanism to generate the terahertz wave image, and the visible light imaging mechanism is located on the window.

In some embodiments, an extension line of an optical axis of the visible light imaging mechanism passes through the center of rotation of the speculum of the terahertz wave imaging mechanism.

In some embodiments, the data processing device is further configured to that: when it is determined that a suspected item exists in the object to be detected based on the terahertz wave image, marking one or more areas of the terahertz wave image as a suspected area in which the suspected item is located, identifying an area in which the object to be detected is located based on the visible light image, and if the suspected area corresponds to an area of the visible light image outside the area in which the object to be detected is located, removing the suspected area.

In some embodiments, the data processing device is further configured to that: if the suspected area corresponds to an area of the visible light image within the area in which the object to be detected is located, identifying whether an item in the area of the visible light image corresponding to the suspected area is a non-hidden item or not, if the item is a non-hidden item, determining that the suspected area does not contain a prohibited item, and if the item is not a non-hidden item, determining that the suspected area contains a prohibited item.

In some embodiments, the terahertz wave security inspection system further comprises an image display device in data communication with the data processing device and configured to display the terahertz wave image and/or the visible light image generated by the information acquisition device.

In some embodiments, the terahertz wave imaging mechanism is a terahertz wave human body security instrument, and the visible light imaging mechanism is an optical camera.

In some embodiments, the optical camera is a pinhole camera or an infrared camera.

According to an embodiment of another aspect of the present disclosure, there is further provided a terahertz wave security inspection method implemented by the terahertz wave security inspection system described above, comprising: an information acquisition step of generating a terahertz wave image of an object to be detected by using a terahertz wave imaging mechanism and generating a visible light image of the object to be detected by using a visible light imaging mechanism; a prohibited item initial-determination step of processing the terahertz wave image and determining whether a suspected item exists in the object to be detected or not by using a data processing device; and if the data processing device determines that a suspected item exists in the object to be detected, performing a prohibited item secondary-determination step of determining whether the suspected item is a prohibited item or not based on the visible light image and the terahertz wave image by using the data processing device.

In some embodiments, in the prohibited item initial-determination step, the data processing device further marks one or more areas of the terahertz wave image as a suspected area in which the suspected item is located.

In some embodiments, in the prohibited item secondary-determination step, the data processing device identifies an area in which the object to be detected is located based on the visible light image, and if the suspected area corresponds to an area of the visible light image outside the area in which the object to be detected is located, the data processing device removes the suspected area.

In some embodiments, identifying an area in which the object to be detected is located based on the visible light image comprises: framing the area of the visible light image in which the object to be detected is located by using a specific color; or performing a pixel-level segmentation on the object to be detected in the visible light image, and obtaining the area in which the object to be detected is located by using a pixel-level segmentation result.

In some embodiments, subsequent to the identifying an area in which the object to be detected is located based on the visible light image, a pixel value of an area outside the area of the terahertz wave image corresponding to the area in which the object to be detected is located in the visible light image is set to zero to remove background interference.

In some embodiments, the prohibited item secondary-determination step comprises: if the suspected area corresponds to an area of the visible light image within the area in which the object to be detected is located, identifying whether an item in the area of the visible light image corresponding to the suspected area is a non-hidden item or not, if the item is a non-hidden item, determining that the suspected area does not contain a prohibited item, and if the item is not a non-hidden item, determining that the suspected area contains a prohibited item.

In some embodiments, if it is determined in the prohibited item secondary-determination step that the suspected area contains a prohibited item, the method further comprises: a displaying step of displaying the terahertz wave image and/or the visible light image by an image display device.

In some embodiments, the displaying step further includes: displaying a terahertz wave dynamic video and a visible light dynamic video simultaneously through the image display device, and displaying the suspected area determined to contain a prohibited item, in a form of an alarm frame, simultaneously in the terahertz wave image and the visible light image.

In some embodiments, the displaying step further comprises: replacing the suspected area determined to contain a prohibited item in the visible light image with a corresponding terahertz wave image.

In some embodiments, the displaying step further comprises: displaying a visible light dynamic video through the image display device, and displaying the suspected area determined to contain a prohibited item in the visible light image in a form of an alarm frame.

In some embodiments, the displaying step further comprises: replacing the suspected area determined to contain a prohibited item in the visible light image with a corresponding terahertz wave image.

### BRIEF DESCRIPTION OF THE DRAWINGS

FIG. 1 shows a schematic structural diagram of a terahertz wave security inspection system according to an exemplary embodiment of the present disclosure;
FIG. 2 shows a schematic structural diagram of a terahertz wave security inspection system according to another exemplary embodiment of the present disclosure;
FIG. 3 shows a schematic diagram of a terahertz wave security inspection method according to an exemplary embodiment of the present disclosure; and
FIG. 4 shows a flowchart of a terahertz wave security inspection method according to an exemplary embodiment of the present disclosure.

### DETAILED DESCRIPTION OF EMBODIMENTS

Although the present disclosure will be fully described with reference to the drawings containing the preferred embodiments of the present disclosure, it should be understood that those skilled in the art may modify the content described herein while obtaining the technical effects of the present disclosure. Therefore, it should be understood that the above description is a broad disclosure for those ordinary skilled in the art, and its content is not intended to limit the exemplary embodiments described in the present disclosure.

In the following detailed description, for ease of interpretation, many specific details are set forth to provide a comprehensive understanding of the embodiments of the present disclosure. Obviously, however, one or more embodiments may also be implemented without these specific details. In other cases, well-known structures and devices are shown in diagrammatic form to simplify the drawings.

According to a general inventive concept of the present disclosure, there is provided a terahertz wave security inspection system, including: an information acquisition device including a terahertz wave imaging mechanism configured to generate a terahertz wave image of an object to be detected and a visible light imaging mechanism configured to generate a visible light image of the object to be detected, where the visible light image generated by the visible light imaging mechanism matches the terahertz wave image generated by the terahertz wave imaging mechanism within a range of depth of field of the terahertz wave imaging mechanism; and a data processing device in data communication with the information acquisition device and configured to: acquire the terahertz wave image of the object to be detected provided by the terahertz wave imaging mechanism and the visible light image of the object to be detected provided by the visible light imaging mechanism, determine whether a suspected item exists in the object to be detected or not based on the terahertz wave image and the visible light image, and if it is determined that a suspected item exists in the object to be detected, determine whether the suspected item is a prohibited item or not based on the visible light image and the terahertz wave image.

According to another general inventive concept of the present disclosure, there is provided a terahertz wave security inspection method using the terahertz wave security inspection system described above, including: an information acquisition step of generating a terahertz wave image of an object to be detected by using a terahertz wave imaging mechanism and generating a visible light image of the object to be detected by using a visible light imaging mechanism; a prohibited item initial-determination step of processing the terahertz wave image by using a data processing device and determining whether a suspected item exists in the object to be detected or not; and if the data processing device determines that a suspected item exists in the object to be detected , performing a prohibited item secondary-determination step of determining whether the suspected item is a prohibited item or not based on the visible light image and the terahertz wave image by using the data processing device.

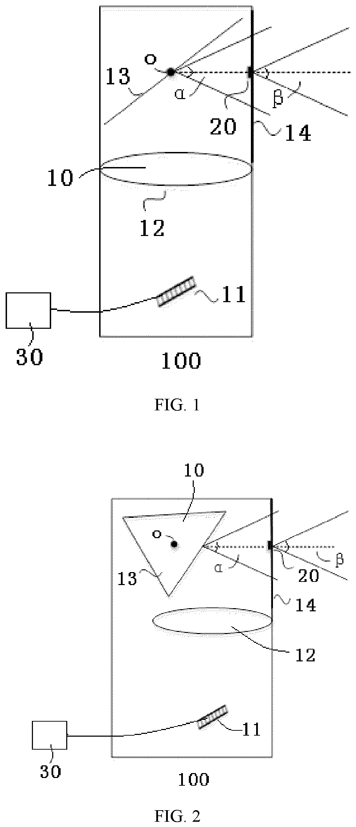

FIG. 1 shows a schematic structural diagram of a terahertz wave security inspection system according to an embodiment of the invention. FIG. 2 shows a schematic structural diagram of a terahertz wave security inspection system according to another embodiment of the invention.

As shown in FIG. 1, a terahertz wave security inspection system 100 according to the present invention includes: an information acquisition device including a terahertz wave imaging mechanism 10 configured to generate a terahertz wave image of an object to be detected and a visible light imaging mechanism 20 configured to generate a visible light image of the object to be detected, where the visible light image generated by the visible light imaging mechanism 20 matches the terahertz wave image generated by the terahertz wave imaging mechanism 10 within a range of depth of field of the terahertz wave imaging mechanism 10. Here, the visible light image generated by the visible light imaging mechanism 20 matching the terahertz wave image generated by the terahertz wave imaging mechanism 10 within a range of depth of field of the terahertz wave imaging mechanism 10 refers to that within the range of depth of field (for example, 0.5 m-5 m) of the terahertz wave imaging mechanism 10, the visible light image generated by the visible light imaging mechanism 20 substantially corresponds to the terahertz wave image generated by the terahertz wave imaging mechanism 10 in spatial position, that is, a position and a size of the object to be detected in the visible light image substantially correspond to a position and a size of the object to be detected in the terahertz wave image.

In an exemplary embodiment, as shown in FIG. 1, a field of view β of the visible light imaging mechanism 20 is generally greater than a field of view α of the terahertz wave imaging mechanism 10. In this case, the visible light image generated by the visible light imaging mechanism 20 matching the terahertz wave image generated by the terahertz wave imaging mechanism 10 within the range of depth of field of the terahertz wave imaging mechanism 10 includes: the visible light image generated by the visible light imaging mechanism 20, after being cropped, matches the terahertz wave image generated by the terahertz wave imaging mechanism 10 within the range of depth of field of the terahertz wave imaging mechanism 10.

In an exemplary embodiment, as shown in FIG. 1, the terahertz wave imaging mechanism 10 includes a detector array 11, a focusing lens 12 and a speculum 13. The terahertz wave emitted by a human body is reflected by the speculum 13 to the focusing lens 12 for focusing. The focused terahertz wave is received by the detector array 11 at the focal position, and the detector array 11 converts a terahertz wave signal into an electrical signal. The speculum 13 reciprocates around a center of rotation, thereby realizing terahertz imaging within the field of view.

In an exemplary embodiment, as shown in FIG. 1, the visible light imaging mechanism 20 may be, for example, a pinhole camera, so as to avoid affecting the imaging of the object to be detected by the terahertz wave imaging mechanism 10. Of course, those skilled in the art should understand that in some other embodiments of the present disclosure, the visible light imaging mechanism 20 may also be an infrared camera or other depth cameras with depth detection capabilities.

According to the invention, as shown in FIG. 1, in order to ensure that the visible light image generated by the visible light imaging mechanism 20 matches the terahertz wave image generated by the terahertz wave imaging mechanism 10 within the range of depth of field of the terahertz wave imaging mechanism 10, the visible light imaging mechanism 20 is positioned so that an extension line of an optical axis of the visible light imaging mechanism 20 passes through the center of rotation of the speculum 13 of the terahertz wave imaging mechanism 10.

However, those skilled in the art should understand that, in some other embodiments of the present disclosure, the visible light imaging mechanism 20 may also be located at an inner side of a virtual cone with the center of rotation of the speculum 13 of the terahertz wave imaging mechanism 10 as a vertex, a normal direction of field of view as a centerline, and a vertex angle of view of α/3, where α is the field of view of the terahertz wave imaging mechanism 10. By arranging the visible light imaging mechanism 20 inside the virtual cone described above, the visible light image generated by the visible light imaging mechanism 20 may also match the terahertz wave image generated by the terahertz wave imaging mechanism 10 within the range of depth of field of the terahertz wave imaging mechanism 10.

According to the invention, as shown in FIG. 1, the terahertz wave security inspection system 100 includes a housing 14, the terahertz wave imaging mechanism 10 is located inside the housing 14. The housing 14 is provided with a window which may be formed of, for example, materials such as polytetrafluoroethylene, polyethylene, etc. The terahertz wave emitted by the object to be detected may be transmitted through the window and received by the terahertz wave imaging mechanism 10 to generate the terahertz wave image. The visible light imaging mechanism 20 is located on the window and faces an area used to wait for detecting, so as to take an optical image of the object to be detected.

In an exemplary embodiment, as shown in FIG. 1, the speculum 13 of the terahertz wave imaging mechanism 10 is a flat speculum and reciprocates around the center of rotation of the speculum 13. However, those skilled in the art should understand that in some other embodiments of the present disclosure, the speculum 13 of the terahertz wave imaging mechanism 10 may also be other forms of speculums, such as a curved speculum. A scanning mode of the terahertz wave imaging mechanism 10 may also be a two-dimensional scanning mode. In addition, the speculum 13 of the terahertz wave imaging mechanism 10 may also be replaced by a polyhedron speculum (as shown in FIG. 2). In this case, the polyhedron speculum rotates around the center of rotation of the speculum 13, and the extension line of the optical axis of the visible light imaging mechanism 20 passes through an axis of rotation of the polyhedron speculum and is perpendicular to the axis of rotation of the polyhedron speculum.

According to an embodiment of the present disclosure, the terahertz wave imaging mechanism 10 may be, for example, a terahertz wave human body security instrument. Of course, those skilled in the art should understand that, in some other embodiments of the present disclosure, the terahertz wave imaging mechanism 10 may also take other forms.

In an exemplary embodiment, as shown in FIG. 1, the data processing device 30 is in data communication with the information acquisition device, in a wired or wireless manner. Specifically, the data processing device 30 may obtain the terahertz wave image and visible light image described above. The data processing device 30 may also transmit instructions or other information to the information acquisition device, for example, to instruct the information acquisition device to start collecting the terahertz wave image and/or the visible light image.

In an exemplary embodiment, as shown in FIG. 1, the data processing device 30 may determine, based on the terahertz wave image and the visible light image, whether a prohibited item exists in the object to be detected or not. Specifically, the data processing device 30 may determine whether a suspected item exist in the object to be detected or not based on the terahertz wave image. If the data processing device 30 determines that the suspected item exists, then further determining whether the suspected item is a prohibited item or not based on the visible light image and the terahertz wave image.

In an exemplary embodiment, as shown in FIG. 1, the data processing device 30 may be configured such that: when the data processing device 30 determines whether a suspected item exists in the object to be detected or not based on the terahertz wave image, the data processing device 30 marks one or more areas of the terahertz wave image as suspected areas in which the suspected items are located by using a deep learning algorithm. Further, the data processing device 30 may be configured such that: when the data processing device 30 determines whether a prohibited item exists in the suspected area or not based on the visible light image and the terahertz wave image, first identifying an area in which the object to be detected is located based on the visible light image by using the deep learning algorithm. If the above-mentioned suspected area corresponds to an area of the visible light image outside the area in which the object to be detected is located, removing the suspected area.

In an exemplary embodiment, as shown in FIG. 1, the data processing device 30 is further configured such that: if the suspected area corresponds to an area of the visible light image within the area in which the object to be detected is located, identifying whether an item in the area of the visible light image corresponding to the suspected area is a non-hidden item or not by using, for example, the deep learning algorithm, and if so, determining that no prohibited items exist in the suspected area; or determining that a prohibited item exists in the suspected area.

In the terahertz wave image, outer packaging materials such as plastic, paper, textiles, and leather may be transmitted by terahertz waves. Therefore, when a human body carries an item that may not be penetrated by a terahertz wave, the terahertz wave is reflected by the item, and thus an outline of the item appears in the terahertz wave image. Although the outline of the item is displayed, whether the item is a prohibited item or not may not be accurately determined from the terahertz wave image, and it may only be determined that the item is a suspected item. In this embodiment, the visible light imaging mechanism 20 is also provided to capture the visible light image of the object to be detected, and the visible light image generated by the visible light imaging mechanism 20 matches the terahertz wave image generated by the terahertz wave imaging mechanism 10 within the range of depth of field of the terahertz wave imaging mechanism 10, so as to determine whether the suspected item in the terahertz wave image is a prohibited item or not more easily and accurately.

In an exemplary embodiment, the terahertz wave security inspection system 100 further includes an image display device in data communication with the data processing device 30. The image display device may display the terahertz wave image and/or the visible light image generated by the information acquisition device. In an exemplary embodiment, the image display device may also display a terahertz wave dynamic video and a visible light dynamic video. The suspected area determined to contain the prohibited item is displayed in both the terahertz wave image and the visible light image in a form of an alarm frame. In an exemplary embodiment, the image display device may also replace the suspected area determined to contain the prohibited item in the visible light image with a corresponding terahertz wave image.

In an exemplary embodiment, the image display device only displays the visible light dynamic video and does not display the terahertz wave image, and the suspected area determined to contain the prohibited item is displayed in the visible light image in a form of an alarm frame. In an exemplary embodiment, the image display device may also replace the suspected area determined to contain the prohibited item in the visible light image with a corresponding terahertz wave image.

In an exemplary embodiment, the data processing device 30 may be configured to frame a suspected area in which a suspected item and/or a prohibited item is located in the terahertz wave image and/or the visible light image by using a specific color. The image display device may display the visible light image and the terahertz wave image of the suspected area in which the suspected item and/or the prohibited item is located has been framed, so that the inspector may make a comparison.

In an exemplary embodiment, the terahertz wave security inspection system 100 further includes a voice prompt device that may prompt whether the object to be detected carries a prohibited item or not according to an identification result. The voice prompt device is advantageous. For example, when items such as backpacks, handbags, etc., are needed to be removed from the object to be detected, the voice prompt device may prompt the object to be detected to remove the items himself/herself, thereby improving operation efficiency. The voice prompt device may also prompt the object to be detected the inspection is over, and thus the object to be detected is allowed to leave. The image display device and/or the voice prompt device may be configured to prompt whether the object to be detected is allowed to pass or not.

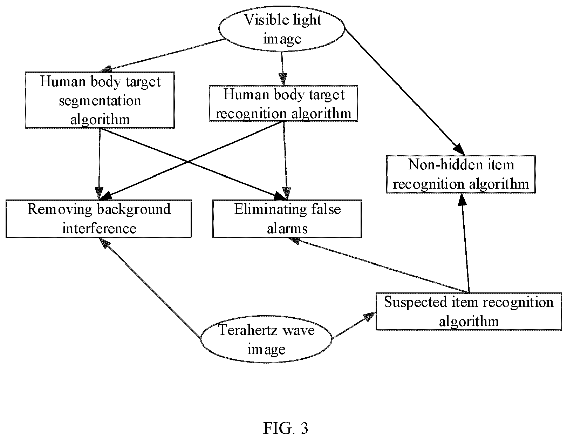

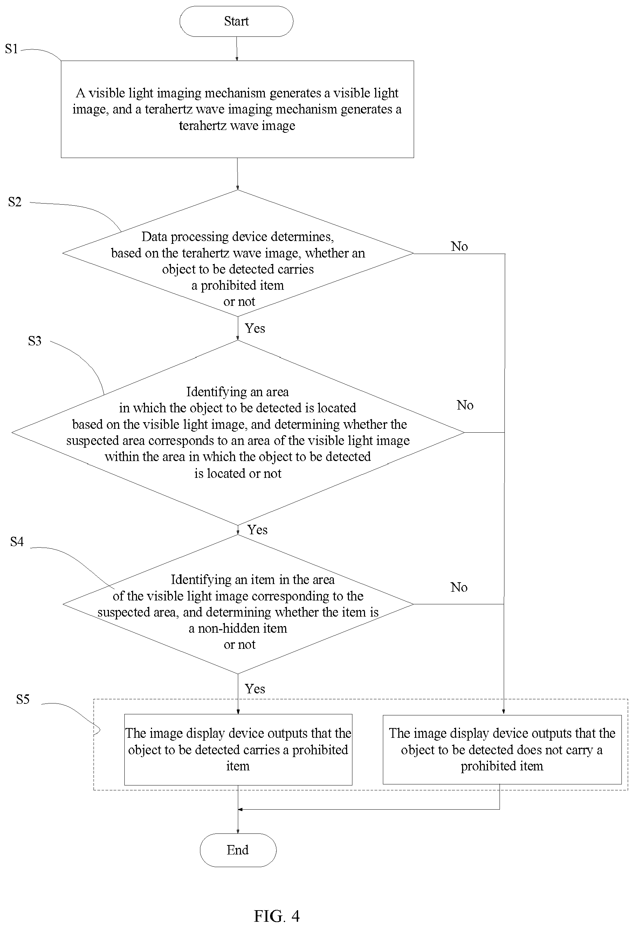

FIG. 3 shows a schematic diagram of a terahertz wave security inspection method according to an exemplary embodiment of the present disclosure. FIG. 4 shows a flowchart of a terahertz wave security inspection method according to an exemplary embodiment of the present disclosure.

As shown in FIG. 3, a human body target segmentation algorithm and a human body target recognition algorithm are used to identify an area in which the human body is located in the visible light image, and a suspected item recognition algorithm is used to identify a suspected area in which the suspected item is located in the terahertz wave image. It is determined whether the suspected area in which the suspected item is located in the terahertz wave image corresponds to an area of the visible light image within the area in which the human body is located or not. If so, a pixel value of an area outside the area of the terahertz wave image corresponding to the area in which the object to be detected is located in the visible light image is set to zero, so as to remove background interference. A non-hidden item recognition algorithm is used to identify whether the suspected item in the area in which the human body is located is a non-hidden item or not. This security inspection method may effectively eliminate false alarms.

According to another aspect of the present disclosure, there is further provided a terahertz wave security inspection method that performs security inspection by using the terahertz wave security inspection system 100 described above.

The terahertz wave security inspection method according to an embodiment of the present disclosure includes: an information acquisition step of generating a terahertz wave image of an object to be detected by using a terahertz wave imaging mechanism 10 and generating a visible light image of the object to be detected by using a visible light imaging mechanism 20; a prohibited item initial-determination step of processing the terahertz wave image by using the data processing device 30 and determining whether a suspected item exists in the object to be detected or not; and if the data processing device 30 determines that the object to be detected has a suspected item, performing a prohibited item secondary-determination step of determining whether the suspected item is a prohibited item or not based on the visible light image and the terahertz wave image by using the data processing device 30.

In an exemplary embodiment, the terahertz security inspection method includes: in the prohibited item initial-determination step, the data processing device 30 marks one or more areas in the terahertz wave image as suspected areas in which the suspected items may be located; and in the prohibited item secondary-determination step, the data processing device 30 identifies an area in which the object to be detected is located based on the visible light image, and if a suspected area corresponds to an area of the visible light image outside the area in which the object to be detected is located, removes the suspected area.

In an exemplary embodiment, identifying an area in which the object to be detected is located based on the visible light image includes: framing an area in which the object to be detected is located in the visible light image by using a specific color. In some other embodiments of the present disclosure, the identifying an area in which the object to be detected is located based on the visible light image may include: performing a pixel-level segmentation on the object to be detected in the visible light image, and obtaining an area in which the object to be detected is located by using a pixel-level segmentation result, so as to determine the area in which the object to be detected is located more accurately.

In an exemplary embodiment, if the suspected area corresponds to an area of the visible light image within the area in which the object to be detected is located, the method further includes: identifying whether an item in an area of the visible light image corresponding to the suspected area is a non-hidden item or not, and if it is identified that the item is a non-hidden item, determining that no prohibited items exist in the suspected area; or if it is identified that the item is not a non-hidden item, determining that a prohibited item exists in the suspected area.

In an exemplary embodiment, subsequent to the identifying an area in which the object to be detected is located based on the visible light image, a pixel value of an area outside the area of the terahertz wave image corresponding to the area in which the object to be detected is located in the visible light image is set to zero, so as to remove background interference.

In an exemplary embodiment, if it is determined in the prohibited item secondary-determination step that a prohibited item exists in the object to be detected, the method further includes: a displaying step of displaying the terahertz wave image and/or visible light image described above by using the image display device. It should be noted that in some other embodiments of the present disclosure, the displaying step may also be performed when it is determined in the prohibited item secondary-determination step that the object to be detected does not have a prohibited item.

In an exemplary embodiment, the displaying step further includes: displaying a terahertz wave dynamic video and a visible light dynamic video simultaneously on the image display device, and displaying the suspected area determined to contain the prohibited item simultaneously in the terahertz wave image and the visible light image in a form of an alarm frame. In an exemplary embodiment, the displaying step further includes: replacing the suspected area determined to contain the prohibited item in the visible light image with a corresponding terahertz wave image.

In an exemplary embodiment, the displaying step further includes: displaying the visible light dynamic video through the image display device and not displaying the terahertz wave dynamic video, and displaying the suspected area determined to contain the prohibited item in the visible light image in a form of an alarm frame. In an exemplary embodiment, the displaying step further includes: replacing the suspected area determined to contain the prohibited item in the visible light image with a corresponding terahertz wave image.

In order to enable the present disclosure to be more fully understood, the present disclosure is described below through a specific security inspection process shown in FIG. 4.

S1: The visible light imaging mechanism 20 captures a visible light image of a human body and transmits the visible light image to the data processing device 30, while the terahertz wave imaging mechanism 10 collects a terahertz wave image of the human body and transmits the terahertz wave image to the data processing device 30.

S2: The data processing device 30 processes the terahertz wave image to determine whether an object to be detected carries a suspected item or not. 1) If it is determined based on the terahertz wave image that the object to be detected carries a suspected item, proceed to S3; 2) if it is determined based on the terahertz wave image that the object to be detected does not carry the suspected item, transmitting an inspection result to the image display device, and prompting the object to be detected to pass, for example, through the voice prompt device.

S3: The data processing device 30 processes the visible light image of the human body, identifies an area in which the human body is located, and determines whether a suspected area in which a suspected item is located in the terahertz wave image corresponds to an area of the visible light image within the area in which the human body is located or not. 1) If it is determined that the suspected area in which the suspected item is located in the terahertz wave image corresponds to an area of the visible light image within the area in which the human body is located, proceed to S4; 2) if it is determined that the suspected area in which the suspected item is located in the terahertz wave image corresponds to an area of the visible light image outside the area in which the human body is located, removing the suspected area, transmitting an inspection result to the image display device, and prompting the object to be detected to pass, for example, through the voice prompt device.

S4: A deep learning algorithm is used to identify an item in an area of the visible light image corresponding to the suspected area, and determine whether the item is a non-hidden item or not. 1) If the item is a non-hidden item, transmitting an inspection result to the image display device, and prompting the object to be detected to pass, for example, through the voice prompt device; 2) if the item is not a non-hidden item, transmitting an inspection result to the image display device, and then proceed to step S5.

S5: A location of the prohibited item is framed with a specific color on the terahertz wave image and visible light image of the object to be detected, and a result is transmitted to the image display device. The image display device displays an inspection result, and the voice prompt device, for example, prompts that the object to be detected carries a prohibited item and gives an alarm.

The present disclosure aims at a problem that the suspected area of the terahertz wave image may not be accurately determined in a security inspection, and proposes a security inspection system and method combining the terahertz wave imaging and the visible light imaging, so as to improve an inspection accuracy of prohibited items, reduce false alarms, and improve security inspection efficiency.

Those skilled in the art may understand that the embodiments described above are exemplary, and those skilled in the art may make improvements. The structures described in the various embodiments may be combined freely without conflicts in structure or principle.

Although the present disclosure is described with reference to the drawings, the embodiments disclosed in the drawings are for illustrative purposes only and are not to be construed as limiting the present disclosure.

Although some embodiments of the general concept of the present disclosure have been illustrated and described, it should be understood by those ordinary skilled in the art that these embodiments may be changed without departing from the scope of the invention as defined by the appended claims.

It should be noted that the word "comprising" or "including" does not exclude other elements or steps, and the word "a", "an" or "one" does not exclude a plurality. In addition, any reference signs in the claims should not be construed as limiting the scope of the present disclosure.

## Claims

1. A terahertz wave security inspection system (100), comprising:
an information acquisition device comprising a terahertz wave imaging mechanism (10) configured to generate a terahertz wave image of an object to be detected and a visible light imaging mechanism (20) configured to generate a visible light image of the object to be detected; and
a data processing device (30) in data communication with the information acquisition device and configured to: acquire the terahertz wave image of the object to be detected provided by the terahertz wave imaging mechanism (10) and the visible light image of the object to be detected provided by the visible light imaging mechanism (20), determine whether a suspected item exists in the object to be detected or not based on the terahertz wave image and the visible light image, and if it is determined that a suspected item exists in the object to be detected, determine whether the suspected item is a prohibited item or not based on the visible light image and the terahertz wave image;
the system being chracterised in that:
the visible light imaging mechanism (20) is located at an inner side of a virtual cone with a center of rotation of a speculum (13) of the terahertz wave imaging mechanism (10) as a vertex, a normal direction of field of view as a centerline, and a vertex angle of view of α/3, wherein α is a field of view of the terahertz wave imaging mechanism (10), and
the terahertz wave security inspection system (100) further comprises a housing (14) in which the terahertz wave imaging mechanism (10) is located, and the housing (14) is provided with a window, a terahertz wave emitted by the object to be detected is transmitted through the window and received by the terahertz wave imaging mechanism (10) to generate the terahertz wave image, and the visible light imaging mechanism (20) is located on the window.

2. The terahertz wave security inspection system (100) according to claim 1, wherein the visible light image generated by the visible light imaging mechanism (20) matches the terahertz wave image generated by the terahertz wave imaging mechanism (10) within a range of depth of field of the terahertz wave imaging mechanism (10).

3. The terahertz wave security inspection system (100) according to claim 2, wherein the visible light image generated by the visible light imaging mechanism (20) matching the terahertz wave image generated by the terahertz wave imaging mechanism (10) within a range of depth of field of the terahertz wave imaging mechanism (10) comprises: the visible light image generated by the visible light imaging mechanism (20), after being cropped, matches the terahertz wave image generated by the terahertz wave imaging mechanism (10) within the range of depth of field of the terahertz wave imaging mechanism (10).

4. The terahertz wave security inspection system (100) according to claim 1, wherein an extension line of an optical axis of the visible light imaging mechanism (20) passes through the center of rotation of the speculum (13) of the terahertz wave imaging mechanism (10).

5. The terahertz wave security inspection system (100) according to any one of claims 1 to 4,
wherein the data processing device (30) is further configured to that: when it is determined that a suspected item exists in the object to be detected based on the terahertz wave image, marking one or more areas of the terahertz wave image as a suspected area in which the suspected item is located, identifying an area in which the object to be detected is located based on the visible light image, and if the suspected area corresponds to an area of the visible light image outside the area in which the object to be detected is located, removing the suspected area; and
wherein the data processing device (30) is further configured to that: if the suspected area corresponds to an area of the visible light image within the area in which the object to be detected is located, identifying whether an item in the area of the visible light image corresponding to the suspected area is a non-hidden item or not, if the item is a non-hidden item, determining that the suspected area does not contain a prohibited item, and if the item is not a non-hidden item, determining that the suspected area contains a prohibited item.

6. The terahertz wave security inspection system (100) according to any one of claims 1 to 5, wherein the terahertz wave security inspection system (100) further comprises an image display device in data communication with the data processing device (30) and configured to display the terahertz wave image and/or the visible light image generated by the information acquisition device.

7. The terahertz wave security inspection system (100) according to any one of claims 1 to 6,
wherein the terahertz wave imaging mechanism (10) is a terahertz wave human body security instrument, and the visible light imaging mechanism (20) is an optical camera; and
wherein the optical camera is a pinhole camera or an infrared camera.

8. A terahertz wave security inspection method implemented by the terahertz wave security inspection system (100) according to any one of claims 1 to 7, comprising:
an information acquisition step of generating a terahertz wave image of an object to be detected by using the terahertz wave imaging mechanism (10) and generating a visible light image of the object to be detected by using the visible light imaging mechanism (20);
a prohibited item initial-determination step of processing the terahertz wave image and determining whether a suspected item exists in the object to be detected or not by using the data processing device (30); and
if the data processing device (30) determines that a suspected item exists in the object to be detected, performing a prohibited item secondary-determination step of determining whether the suspected item is a prohibited item or not based on the visible light image and the terahertz wave image by using the data processing device (30).

9. The terahertz wave security inspection method according to claim 8,
wherein in the prohibited item initial-determination step, the data processing device (30) further marks one or more areas of the terahertz wave image as a suspected area in which the suspected item is located; and
in the prohibited item secondary-determination step, the data processing device (30) identifies an area in which the object to be detected is located based on the visible light image, and if the suspected area corresponds to an area of the visible light image outside the area in which the object to be detected is located, the data processing device (30) removes the suspected area; and
wherein identifying an area in which the object to be detected is located based on the visible light image comprises:
framing the area of the visible light image in which the object to be detected is located by using a specific color; or
performing a pixel-level segmentation on the object to be detected in the visible light image, and obtaining the area in which the object to be detected is located by using a pixel-level segmentation result; and
wherein subsequent to the identifying an area in which the object to be detected is located based on the visible light image, a pixel value of an area outside the area of the terahertz wave image corresponding to the area in which the object to be detected is located in the visible light image is set to zero to remove background interference.

10. The terahertz wave security inspection method according to claim 9, wherein the prohibited item secondary-determination step comprises: if the suspected area corresponds to an area of the visible light image within the area in which the object to be detected is located, identifying whether an item in the area of the visible light image corresponding to the suspected area is a non-hidden item or not, if the item is a non-hidden item, determining that the suspected area does not contain a prohibited item, and if the item is not a non-hidden item, determining that the suspected area contains a prohibited item.

11. The terahertz wave security inspection method according to claim 10, wherein if it is determined in the prohibited item secondary-determination step that the suspected area contains a prohibited item, the method further comprises:
a displaying step of displaying the terahertz wave image and/or the visible light image by an image display device.

12. The terahertz wave security inspection method according to claim 11,
wherein the displaying step further comprises: displaying a terahertz wave dynamic video and a visible light dynamic video simultaneously through the image display device, and displaying the suspected area determined to contain a prohibited item, in a form of an alarm frame, simultaneously in the terahertz wave image and the visible light image; and
wherein the displaying step further comprises: replacing the suspected area determined to contain a prohibited item in the visible light image with a corresponding terahertz wave image.

13. The terahertz wave security inspection method according to claim 11,
wherein the displaying step further comprises: displaying a visible light dynamic video through the image display device, and displaying the suspected area determined to contain a prohibited item in the visible light image in a form of an alarm frame; and
wherein the displaying step further comprises: replacing the suspected area determined to contain a prohibited item in the visible light image with a corresponding terahertz wave image.

## Patentansprüche

1. Terahertzwellen-Sicherheitsinspektionssystem (100), umfassend:
eine Informationserfassungsvorrichtung, die einen Terahertzwellen-Abbildungsmechanismus (10) umfasst, der dazu ausgestaltet ist, ein Terahertzwellenbild eines zu detektierenden Objekts zu erzeugen, und einen Abbildungsmechanismus (20) für sichtbares Licht, der dazu ausgestaltet ist, ein Bild des zu detektierenden Objekts in sichtbarem Licht zu erzeugen, und
eine Datenverarbeitungsvorrichtung (30), die in Datenkommunikation mit der Informationserfassungsvorrichtung steht und ausgestaltet ist zum: Erfassen des Terahertzwellenbildes des zu detektierenden Objekts, das von dem Terahertzwellen-Abbildungsmechanismus (10) bereitgestellt wird, und des Bildes in sichtbarem Licht des zu detektierenden Objekts, das von dem Abbildungsmechanismus (20) für sichtbares Licht bereitgestellt wird, Bestimmen auf Grundlage des Terahertzwellenbildes und des Bildes in sichtbarem Licht, ob ein verdächtiger Gegenstand in dem zu detektierenden Objekt vorhanden ist oder nicht, und wenn bestimmt wird, dass ein verdächtiger Gegenstand in dem zu detektierenden Objekt vorhanden ist, Bestimmen auf Grundlage des Bildes in sichtbarem Licht und des Terahertzwellenbildes, ob es sich bei dem verdächtigen Gegenstand um einen verbotenen Gegenstand handelt oder nicht,
wobei das System **dadurch gekennzeichnet ist, dass**:
sich der Abbildungsmechanismus (20) für sichtbares Licht an einer Innenseite eines virtuellen Kegels mit einem Drehzentrum eines Spiegels (13) des Terahertzwellen-Abbildungsmechanismus (10) als Scheitelpunkt, einer Normalenrichtung des Sichtfelds als Mittellinie und einem Scheitelpunktsichtwinkel von α/3, wobei α ein Sichtfeld des Terahertzwellen-Abbildungsmechanismus (10) ist, befindet und
das Terahertzwellen-Sicherheitsinspektionssystem (100) ferner ein Gehäuse (14) umfasst, in dem sich der Terahertzwellen-Abbildungsmechanismus (10) befindet und das Gehäuse (14) mit einem Fenster versehen ist, eine von dem zu detektierenden Objekt emittierte Terahertzwelle durch das Fenster hindurchgelassen und von dem Terahertzwellen-Abbildungsmechanismus (10) empfangen wird, um das Terahertzwellenbild zu erzeugen, und sich der Abbildungsmechanismus (20) für sichtbares Licht auf dem Fenster befindet.

2. Terahertzwellen-Sicherheitsinspektionssystem (100) nach Anspruch 1, wobei das von dem Abbildungsmechanismus (20) für sichtbares Licht erzeugte Bild in sichtbarem Licht mit dem von dem Terahertzwellen-Abbildungsmechanismus (10) erzeugten Terahertzwellenbild innerhalb eines Schärfentiefebereichs des Terahertzwellen-Abbildungsmechanismus (10) übereinstimmt.

3. Terahertzwellen-Sicherheitsinspektionssystem (100) nach Anspruch 2, wobei das durch den Abbildungsmechanismus (20) für sichtbares Licht erzeugte Bild in sichtbarem Licht, das mit dem durch den Terahertzwellen-Abbildungsmechanismus (10) erzeugten Terahertzwellenbild innerhalb eines Schärfentiefebereichs des Terahertzwellen-Abbildungsmechanismus (10) übereinstimmt, umfasst: das von dem Abbildungsmechanismus (20) für sichtbares Licht erzeugte Bild in sichtbarem Licht stimmt nach dem Zuschneiden mit dem von dem Terahertzwellen-Abbildungsmechanismus (10) erzeugten Terahertzwellenbild innerhalb des Schärfentiefebereichs des Terahertzwellen-Abbildungsmechanismus (10) überein.

4. Terahertzwellen-Sicherheitsinspektionssystem (100) nach Anspruch 1, wobei eine Verlängerungslinie einer optischen Achse des Abbildungsmechanismus (20) für sichtbares Licht durch das Drehzentrum des Spiegels (13) des Terahertzwellen-Abbildungsmechanismus (10) verläuft.

5. Terahertzwellen-Sicherheitsinspektionssystem (100) nach einem der Ansprüche 1 bis 4,
wobei die Datenverarbeitungsvorrichtung (30) ferner ausgestaltet ist zum: wenn auf Grundlage des Terahertzwellenbildes bestimmt wird, dass ein verdächtiger Gegenstand in dem zu detektierenden Objekt vorhanden ist, Markieren eines oder mehrerer Bereiche des Terahertzwellenbildes als verdächtigen Bereich, in dem sich der verdächtige Gegenstand befindet, Festlegen eines Bereichs, in dem sich das zu detektierende Objekt befindet, auf Grundlage des Bildes in sichtbarem Licht, und wenn der verdächtige Bereich einem Bereich des Bildes in sichtbarem Licht außerhalb des Bereichs entspricht, in dem sich das zu detektierende Objekt befindet, Entfernen des verdächtigen Bereichs, und
wobei die Datenverarbeitungsvorrichtung (30) ferner ausgestaltet ist zum: wenn der verdächtige Bereich einem Bereich des Bildes in sichtbarem Licht innerhalb des Bereichs entspricht, in dem sich das zu detektierende Objekt befindet, Feststellen, ob ein Gegenstand in dem Bereich des Bildes in sichtbarem Licht, der dem verdächtigen Bereich entspricht, ein nicht versteckter Gegenstand ist oder nicht, wenn der Gegenstand ein nicht versteckter Gegenstand ist, Bestimmen, dass der verdächtige Bereich keinen verbotenen Gegenstand enthält, und wenn der Gegenstand kein nicht versteckter Gegenstand ist, Bestimmen, dass der verdächtige Bereich einen verbotenen Gegenstand enthält.

6. Terahertzwellen-Sicherheitsinspektionssystem (100) nach einem der Ansprüche 1 bis 5, wobei das Terahertzwellen-Sicherheitsinspektionssystem (100) ferner eine Bildanzeigevorrichtung umfasst, die in Datenkommunikation mit der Datenverarbeitungsvorrichtung (30) steht und dazu ausgestaltet ist, das Terahertzwellenbild und/oder das Bild in sichtbarem Licht, die/das von der Informationserfassungsvorrichtung erzeugt werden/wird, anzuzeigen.

7. Terahertzwellen-Sicherheitsinspektionssystem (100) nach einem der Ansprüche 1 bis 6,
wobei der Terahertzwellen-Abbildungsmechanismus (10) ein Terahertzwellen-Sicherheitsinstrument für den menschlichen Körper ist und der Abbildungsmechanismus (20) für sichtbares Licht eine optische Kamera ist, und
wobei die optische Kamera eine Lochkamera oder eine Infrarotkamera ist.

8. Terahertzwellen-Sicherheitsinspektionsverfahren, das durch das Terahertzwellen-Sicherheitsinspektionssystem (100) nach einem der Ansprüche 1 bis 7 implementiert wird, umfassend:
einen Informationserfassungsschritt des Erzeugens eines Terahertzwellenbildes eines zu detektierenden Objekts unter Verwendung des Terahertzwellen-Abbildungsmechanismus (10) und des Erzeugens eines Bildes in sichtbarem Licht des zu detektierenden Objekts unter Verwendung des Abbildungsmechanismus (20) für sichtbares Licht,
einen anfänglichen Bestimmungsschritt für verbotene Gegenstände des Verarbeitens des Terahertzwellenbildes und des Bestimmens unter Verwendung der Datenverarbeitungsvorrichtung (30), ob ein verdächtiger Gegenstand in dem zu detektierenden Objekt vorhanden ist oder nicht, und
wenn die Datenverarbeitungsvorrichtung (30) bestimmt, dass ein verdächtiger Gegenstand in dem zu detektierenden Objekt vorhanden ist, Durchführen eines sekundären Bestimmungsschritts für verbotene Gegenstände des Bestimmens auf Grundlage des Bildes in sichtbarem Licht und des Terahertzwellenbildes, ob der verdächtige Gegenstand ein verbotener Gegenstand ist oder nicht, unter Verwendung der Datenverarbeitungsvorrichtung (30).

9. Terahertzwellen-Sicherheitsinspektionsverfahren nach Anspruch 8,
wobei die Datenverarbeitungsvorrichtung (30) in dem anfänglichen Bestimmungsschritt für verbotene Gegenstände ferner einen oder mehrere Bereiche des Terahertzwellenbildes als einen verdächtigen Bereich markiert, in dem sich der verdächtige Gegenstand befindet, und
die Datenverarbeitungsvorrichtung (30) in dem sekundären Bestimmungsschritt für verbotene Gegenstände auf Grundlage des Bildes in sichtbarem Licht einen Bereich festlegt, in dem sich das zu detektierende Objekt befindet, und wenn der verdächtige Bereich einem Bereich des Bildes in sichtbarem Licht außerhalb des Bereiches, in dem sich das zu detektierende Objekt befindet, entspricht, die Datenverarbeitungsvorrichtung (30) den verdächtigen Bereich entfernt, und
wobei das Festlegen eines Bereichs, in dem sich das zu detektierende Objekt befindet, auf Grundlage des Bildes in sichtbarem Licht umfasst:
Umrahmen des Bereichs des Bildes in sichtbarem Licht, in dem sich das zu detektierende Objekt befindet, unter Verwendung einer bestimmten Farbe, oder
Durchführen einer Segmentierung auf Pixelebene des zu detektierenden Objekts in dem Bild in sichtbarem Licht und Ermitteln des Bereichs, in dem sich das zu detektierende Objekt befindet, unter Verwendung eines Ergebnisses der Segmentierung auf Pixelebene, und
wobei im Anschluss an das Festlegen eines Bereichs, in dem sich das zu detektierende Objekt befindet, auf Grundlage des Bildes in sichtbarem Licht, ein Pixelwert eines Bereichs außerhalb des Bereichs des Terahertzwellenbildes, der dem Bereich entspricht, in dem sich das zu detektierende Objekt in dem Bild in sichtbarem Licht befindet, auf null gesetzt wird, um Hintergrundstörungen zu entfernen.

10. Terahertzwellen-Sicherheitsinspektionsverfahren nach Anspruch 9, wobei der sekundäre Bestimmungsschritt für verbotene Gegenstände umfasst: wenn der verdächtige Bereich einem Bereich des Bildes in sichtbarem Licht innerhalb des Bereichs entspricht, in dem sich das zu detektierende Objekt befindet, Feststellen, ob ein Gegenstand in dem Bereich des Bildes in sichtbarem Licht, der dem verdächtigen Bereich entspricht, ein nicht versteckter Gegenstand ist oder nicht, wenn der Gegenstand ein nicht versteckter Gegenstand ist, Bestimmen, dass der verdächtige Bereich keinen verbotenen Gegenstand enthält, und wenn der Gegenstand kein nicht versteckter Gegenstand ist, Bestimmen, dass der verdächtige Bereich einen verbotenen Gegenstand enthält.

11. Terahertzwellen-Sicherheitsinspektionsverfahren nach Anspruch 10, wobei, wenn in dem sekundären Bestimmungsschritt für verbotene Gegenstände bestimmt wird, dass der verdächtige Bereich einen verbotenen Gegenstand enthält, das Verfahren ferner umfasst:
einen Anzeigeschritt des Anzeigens des Terahertzwellenbildes und/oder des Bildes in sichtbarem Licht durch eine Bildanzeigevorrichtung.

12. Terahertzwellen-Sicherheitsinspektionsverfahren nach Anspruch 11,
wobei der Anzeigeschritt ferner umfasst: gleichzeitiges Anzeigen eines dynamischen Terahertzwellenvideos und eines dynamischen Videos in sichtbarem Licht durch die Bildanzeigevorrichtung und gleichzeitiges Anzeigen des verdächtigen Bereichs, bei dem bestimmt wurde, dass er einen verbotenen Gegenstand enthält, in Form eines Alarmrahmens in dem Terahertzwellenbild und in dem Bild in sichtbarem Licht, und
wobei der Anzeigeschritt ferner umfasst: Ersetzen des verdächtigen Bereichs, bei dem bestimmt wurde, dass er einen verbotenen Gegenstand enthält, in dem Bild in sichtbarem Licht durch ein entsprechendes Terahertzwellenbild.

13. Terahertzwellen-Sicherheitsinspektionsverfahren nach Anspruch 11,
wobei der Anzeigeschritt ferner umfasst: Anzeigen eines dynamischen Videos in sichtbarem Licht durch die Bildanzeigevorrichtung und Anzeigen des verdächtigen Bereichs, bei dem bestimmt wurde, dass er einen verbotenen Gegenstand enthält, in dem Bild in sichtbarem Licht in Form eines Alarmrahmens, und
wobei der Anzeigeschritt ferner umfasst: Ersetzen des verdächtigen Bereichs, bei dem bestimmt wurde, dass er einen verbotenen Gegenstand enthält, in dem Bild in sichtbarem Licht durch ein entsprechendes Terahertzwellenbild.

## Revendications

1. Système d'inspection de sécurité à rayonnement térahertz (100), comprenant :
un dispositif d'acquisition d'informations comprenant un mécanisme d'imagerie à rayonnement térahertz (10) configuré pour générer une image à rayonnement térahertz d'un objet à détecter et un mécanisme d'imagerie à lumière visible (20) configuré pour générer une image à lumière visible de l'objet à détecter ; et
un dispositif de traitement de données (30) en communication de données avec le dispositif d'acquisition d'informations et configuré pour : acquérir l'image à rayonnement térahertz de l'objet à détecter fournie par le mécanisme d'imagerie à rayonnement térahertz (10) et l'image à lumière visible de l'objet à détecter fournie par le mécanisme d'imagerie à lumière visible (20), déterminer si un élément suspect existe dans l'objet à détecter ou non sur la base de l'image à rayonnement térahertz et de l'image à lumière visible et, si il est déterminé qu'un élément suspect existe dans l'objet à détecter, déterminer si l'élément suspecté est un élément interdit ou non sur la base de l'image à lumière visible et de l'image à rayonnement térahertz ;
le système étant **caractérisé en ce que** :
le mécanisme d'imagerie à lumière visible (20) est situé au niveau d'un côté interne d'un cône virtuel avec un centre de rotation d'un spéculum (13) du mécanisme d'imagerie à rayonnement térahertz (10) en guise de sommet, une direction normale du champ de vision en guise d'axe longitudinal, et un angle de vision au sommet de α/3, où a est un champ de vision du mécanisme d'imagerie à rayonnement térahertz (10), et
le système d'inspection de sécurité à rayonnement térahertz (100) comprend en outre une enceinte (14) dans laquelle le mécanisme d'imagerie à rayonnement térahertz (10) est situé, et l'enceinte (14) est équipée d'un hublot, un rayonnement térahertz émis par l'objet à détecter est transmis à travers le hublot et reçu par le mécanisme d'imagerie à rayonnement térahertz (10) afin de générer l'image à rayonnement térahertz, et le mécanisme d'imagerie à lumière visible (20) est situé sur le hublot.

2. Système d'inspection de sécurité à rayonnement térahertz (100) selon la revendication 1, dans lequel l'image à lumière visible générée par le mécanisme d'imagerie à lumière visible (20) correspond à l'image à rayonnement térahertz générée par le mécanisme d'imagerie à rayonnement térahertz (10) sur une plage de profondeur de champ du mécanisme d'imagerie à rayonnement térahertz (10).

3. Système d'inspection de sécurité à rayonnement térahertz (100) selon la revendication 2, dans lequel l'image à lumière visible générée par le mécanisme d'imagerie à lumière visible (20) qui correspond à l'image à rayonnement térahertz générée par le mécanisme d'imagerie à rayonnement térahertz (10) sur une plage de profondeur de champ du mécanisme d'imagerie à rayonnement térahertz (10) comprend : l'image à lumière visible générée par le mécanisme d'imagerie à lumière visible (20), après avoir été rognée, qui correspond à l'image à rayonnement térahertz générée par le mécanisme d'imagerie à rayonnement térahertz (10) sur la plage de profondeur de champ du mécanisme d'imagerie à rayonnement térahertz (10).

4. Système d'inspection de sécurité à rayonnement térahertz (100) selon la revendication 1, dans lequel une ligne de prolongation d'un axe optique du mécanisme d'imagerie à lumière visible (20) passe par le centre de rotation du spéculum (13) du mécanisme d'imagerie à rayonnement térahertz (10).

5. Système d'inspection de sécurité à rayonnement térahertz (100) selon l'une quelconque des revendications 1 à 4, dans lequel le dispositif de traitement de données (30) est en outre configuré pour : lorsqu'il est déterminé qu'un élément suspecté existe dans l'objet à détecter sur la base de l'image à rayonnement térahertz, marquer une ou plusieurs zone(s) de l'image à rayonnement térahertz comme une zone suspecte dans laquelle l'élément suspecté se trouve, identifier une zone dans laquelle l'objet à détecter se trouve sur la base de l'image à lumière visible, et, si la zone suspectée correspond à une zone de l'image à lumière visible située à l'extérieur de la zone dans laquelle l'objet à détecter se trouve, supprimer la zone suspectée ; et
dans lequel le dispositif de traitement de données (30) est en outre configuré pour : si la zone suspectée correspond à une zone de l'image à lumière visible dans la zone dans laquelle l'objet à détecter se trouve, identifier si un élément dans la zone de l'image à lumière visible qui correspond à la zone suspectée est un élément non dissimulé ou non, et, si l'élément est un élément non dissimulé, déterminer que la zone suspectée ne contient pas d'élément interdit, et, si l'élément n'est pas un élément non dissimulé, déterminer que la zone suspectée contient un élément interdit.

6. Système d'inspection de sécurité à rayonnement térahertz (100) selon l'une quelconque des revendications 1 à 5, dans lequel le système d'inspection de sécurité à rayonnement térahertz (100) comprend en outre un dispositif d'affichage d'images en communication de données avec le dispositif de traitement de données (30) et configuré pour afficher l'image à rayonnement térahertz et/ou l'image à lumière visible générée par le dispositif d'acquisition d'informations.

7. Système d'inspection de sécurité à rayonnement térahertz (100) selon l'une quelconque des revendications 1 à 6,
dans lequel le mécanisme d'imagerie à rayonnement térahertz (10) est un instrument de sécurité de corps humain à rayonnement térahertz, et le mécanisme d'imagerie à lumière visible (20) est un appareil photo optique ; et
dans lequel l'appareil photo optique est un appareil photo à sténopé ou un appareil photo à infrarouges.

8. Procédé d'inspection de sécurité à rayonnement térahertz exécuté par le système d'inspection de sécurité à rayonnement térahertz (100) selon l'une quelconque des revendications 1 à 7, comprenant :
une étape d'acquisition d'informations comprenant la génération d'une image à rayonnement térahertz d'un objet à détecter à l'aide du mécanisme d'imagerie à rayonnement térahertz (10) et la génération d'une image à lumière visible de l'objet à détecter à l'aide du mécanisme d'imagerie à lumière visible (20) ;
une étape de détermination initiale d'élément interdit comprenant le traitement de l'image à rayonnement térahertz et la détermination du fait qu'un élément suspecté existe dans l'objet à détecter ou non à l'aide du dispositif de traitement de données (30) ; et
si le dispositif de traitement de données (30) détermine qu'un élément suspecté existe dans l'objet à détecter, l'exécution d'une étape de détermination secondaire d'élément interdit comprenant la détermination du fait que l'élément suspecté soit un élément interdit ou non sur la base de l'image à lumière visible et de l'image à rayonnement térahertz à l'aide du dispositif de traitement de données (30).

9. Procédé d'inspection de sécurité à rayonnement térahertz selon la revendication 8,
dans lequel, à l'étape de détermination initiale d'élément interdit, le dispositif de traitement de données (30) marque en outre une ou plusieurs zone(s) de l'image à rayonnement térahertz comme une zone suspectée dans laquelle l'élément suspecté se trouve ; et
à l'étape de détermination secondaire d'élément interdit, le dispositif de traitement de données (30) identifie une zone dans laquelle l'objet à détecter se trouve sur la base de l'image à lumière visible, et, si la zone suspectée correspond à une zone de l'image à lumière visible située à l'extérieur de la zone dans laquelle l'objet à détecter se trouve, le dispositif de traitement de données (30) supprime la zone suspectée ; et
dans lequel l'identification d'une zone dans laquelle l'objet à détecter se trouve sur la base de l'image à lumière visible comprend :
le tramage de la zone de l'image à lumière visible dans laquelle l'objet à détecter se trouve à l'aide d'une couleur spécifique ; ou
l'exécution d'une segmentation par niveau de pixels sur l'objet à détecter sur l'image à lumière visible, et l'obtention de la zone dans laquelle l'objet à détecter se trouve à l'aide d'un résultat de segmentation par niveau de pixels ; et
dans lequel, après l'identification d'une zone dans laquelle l'objet à détecter se trouve sur la base de l'image à lumière visible, une valeur de pixel d'une zone située à l'extérieur de la zone de l'image à rayonnement térahertz qui correspond à la zone dans laquelle l'objet à détecter se trouve sur l'image à lumière visible est définie sur zéro afin d'éliminer les interférences de fond.

10. Procédé d'inspection de sécurité à rayonnement térahertz selon la revendication 9, dans lequel l'étape de détermination secondaire d'élément interdit comprend : si la zone suspectée correspond à une zone de l'image à lumière visible dans la zone dans laquelle l'objet à détecter se trouve, l'identification du fait qu'un élément dans la zone de l'image à lumière visible qui correspond à la zone suspectée est un élément non dissimulé ou non, et, si l'élément est un élément non dissimulé, la détermination du fait que la zone suspectée ne contient pas d'élément interdit, et, si l'élément n'est pas un élément non dissimulé, la détermination du fait que la zone suspectée contient un élément interdit.

11. Procédé d'inspection de sécurité à rayonnement térahertz selon la revendication 10, dans lequel, si il est déterminé à l'étape de détermination secondaire d'élément interdit que la zone suspectée contient un élément interdit, le procédé comprend en outre :
une étape d'affichage comprenant l'affichage de l'image à rayonnement térahertz et/ou de l'image à lumière visible par un dispositif d'affichage d'images.

12. Procédé d'inspection de sécurité à rayonnement térahertz selon la revendication 11,
dans lequel l'étape d'affichage comprend en outre : l'affichage d'une vidéo dynamique à rayonnement térahertz et d'une vidéo dynamique à lumière visible en même temps par le biais du dispositif d'affichage d'images, et l'affichage de la zone suspectée déterminée comme contenant un élément interdit, sous la forme d'une trame d'alarme, de manière simultanée sur l'image à rayonnement térahertz et l'image à lumière visible ; et
dans lequel l'étape d'affichage comprend en outre : le remplacement de la zone suspectée déterminée comme contenant un élément interdit sur l'image à lumière visible par une image à rayonnement térahertz correspondante.

13. Procédé d'inspection de sécurité à rayonnement térahertz selon la revendication 11,
dans lequel l'étape d'affichage comprend en outre : l'affichage d'une vidéo dynamique à lumière visible par le biais du dispositif d'affichage d'images, et l'affichage de la zone suspectée déterminée comme contenant un élément interdit sur l'image à lumière visible sous la forme d'une trame d'alarme ; et
dans lequel l'étape d'affichage comprend en outre : le remplacement de la zone suspectée déterminée comme contenant un élément interdit sur l'image à lumière visible par une image à rayonnement térahertz correspondante.
